Europäisches Patentamt

European Patent Office

Office européen des brevets

(11) Veröffentlichungsnummer: **0 438 814 A2**

# (12) EUROPÄISCHE PATENTANMELDUNG

(21) Anmeldenummer: 90125842.6

(22) Anmeldetag: 31.12.90

(51) Int. Cl.5: **C08L 67/06, B62D 29/04,**
**//(C08L67/06,31:04,33:20,67:02)**

(30) Priorität: 26.01.90 DE 4002218

(43) Veröffentlichungstag der Anmeldung:
**31.07.91 Patentblatt 91/31**

(84) Benannte Vertragsstaaten:
**BE DE DK ES FR GB GR IT LU NL**

(71) Anmelder: **HOECHST AKTIENGESELLSCHAFT**
**Postfach 80 03 20**
**W-6230 Frankfurt am Main 80(DE)**

(72) Erfinder: **Maschkowski, Peter**
**Adelhöferstrasse 1**
**W-8701 Gollhofen(DE)**
Erfinder: **Brausendorf, Bernd**
**Hansastrasse 10**
**W-2093 Stelle(DE)**
Erfinder: **Kontny, Karl**
**Lerchenstrasse 26**
**W-2077 Trittau(DE)**

(54) **Faserverstärkte Polyesterformmasse und ihre Verwendung im Karosseriebau.**

(57) Eine härtbare ungesättigte Polyesterformmasse, enthaltend ein Gemisch folgender Komponenten:
A. ethylenisch ungesättigter Polyester
B. ethylenisch ungesättigte, copolymerisierbare monomere Verbindung
C. schwindungsreduzierendes thermoplastisches Polymer D. faserförmiges Verstärkungsmittel
sowie gegebenenfalls
E. Verdickungsmittel, Radikalbildner, Inhibitoren, Füllstoffe, Flammschutzmittel, Gleitmittel, Farbstoffe und/oder Pigmente,
wobei als Komponente C eine Kombination eines Ethylen/Vinylacetat-Mischpolymers mit einem Polyvinylacetat und als Komponente D eine organische Polymerfaser (wie z.B. Polyethylenterephthalat-Faser) eingesetzt werden, weist gute Haftungseigenschaften auf verzinktem Stahlblech auf. Sie läßt sich im Verbund mit Metalloberflächen vorteilhaft z.B. im Karosseriebau einsetzen, da die Haftung auch z.B. bei Lackieralterung erhalten bleibt.

EP 0 438 814 A2

## FASERVERSTÄRKTE POLYESTERFORMMASSE UND IHRE VERWENDUNG IM KAROSSERIEBAU

Die vorliegende Erfindung betrifft eine härtbare, ungesättigte Polyesterformmasse, die einen ethylenisch ungesättigten Polyester, eine copolymerisierbare, ethylenisch ungesättigte monomere Verbindung, eine schwindungsreduzierende thermoplastische Komponente sowie ein faserförmiges Verstärkungsmittel enthält, und die besondere Haftungseigenschaften auf verzinktem Stahlblech besitzt.

Ungesättigte Polyesterformmassen werden zur Herstellung von durch Fasern, wie Glas oder Textilfasern verstärkten Gegenstände eingesetzt und finden verbreitete Verwendung bei der Fertigung von Produkten wie Karosserieteilen (z.B. für Kraftfahrzeuge), Möbeln wie Stühlen, Heizgehäusen, Schalen usw.. Derartige Produkte zeichnen sich gegenüber Metallen u.a. durch leichtes Gewicht, große Festigkeit im Vergleich zum Gewicht, Korrosionsbeständigkeit und durch ihre Flexibilität in der Gestaltung der Teile aus.

Zu den üblichen hitzehärtbaren, durch Fasern verstärkten Formmassen gehören sowohl vorgemischte Formmassen als auch gießbare Harzmassen, die bei vorgeformten Körpern aus Fasermaterial zur Anwendung kommen. Vorgemischte Formmassen enthalten üblicherweise ein ungesättigtes Polyesterharzsystem, Faserverstärkung durch Glasfasern, Füllstoffe oder Streckmittel, einen Radikale bildenden Katalysator für die Polymerisation des Harzsystems und andere Zusätze wie Gleitmittel oder Pigmente. Die vorgemischten Massen werden zu einer teigartigen Masse gemischt, welche direkt in die Preß-, Spritz- oder Strangpreßvorrichtung gefüllt werden kann.

Die verschiedenen Schwierigkeiten, die bei der Herstellung von Formteilen aus den genannten Polyestermassen auftreten können, wie die ungenügenden Oberflächeneigenschaften der Formteile, die starke Schrumpfung der Formmasse beim Härten oder die ungenügende Zähigkeit der Formteile lassen sich durch Zusätze, wie sie beispielsweise in DE 19 53 062 (Zusatz von Polymeren mit Säurefunktionen zur Verminderung der Schrumpfung und zur Gewinnung glatter Oberflächen), DE 26 57 808 (Zusatz von Polyalkylenethermischpolymeren zur Verbesserung der Lagerstabilität sowie zur Erzeugung von hohem Oberflächenglanz), DE 33 32 019 (Zusatz von Pfropfpolymeren auf Kautschuk-Basis zur Erhöhung der Zähigkeit), EP 0 009 761 (Zusatz eines Polyurethans zur Verbesserung der Schlagfestigkeit) und EP 0 092 098 (Zusatz elastomerer Blockpolymere zur Verbesserung der Zähigkeit) beschrieben sind, überwinden.

Für die Anwendung von faserverstärkten Polyesterformmassen in Kombination mit Metalloberflächen besteht jedoch das bislang nur unzureichend gelöste Problem, eine hohe Haftung zwischen Polyesterformteil und Metallformteil zu realisieren.

Zwar lassen sich beide Materialien durch Haftvermittler wie z.B. Polymethylmethacrylatharze, miteinander verbinden, jedoch ist die Beständigkeit dieser "verklebten" Formteile bei Temperaturbelastungen, wie sie beispielsweise bei einem Lackierprozeß auftreten, nicht gewährleistet.

Aufgabe der vorliegenden Erfindung ist es deshalb, eine faserverstärkte, härtbare ungesättigte Polyesterformmasse bereitzustellen, die gute Haftungseigenschaften auf verzinktem Stahlblech besitzt, ohne daß dazu ein Haftvermittler notwendig ist, und deren Haftung auf der Metalloberfläche auch nach thermischer Beanspruchung erhalten bleibt.

Die Aufgabe wird durch eine Polyesterformmasse gelöst, die ein Gemisch folgender Komponenten enthält:

A. ethylenisch ungesättigter Polyester
B. ethylenisch ungesättigte, copolymerisierbare monomere Verbindung
C. schwindungsreduzierendes thermoplastisches Polymer D. faserförmiges Verstärkungsmittel
sowie gegebenenfalls
E. Verdickungsmittel, Radikalbildner, Inhibitoren, Füllstoffe, Flammschutzmittel, Gleitmittel, Farbstoffe und/oder Pigmente.

Dabei findet als Komponente C eine Kombination eines (in Komponente B) löslichen und/oder quellfähigen thermoplastischen Mischpolymers auf der Basis von Ethylen und Vinylacetat sowie eines (in Komponente B) löslichen und/oder quellfähigen Polyvinylacetats Verwendung. Als Komponente D wird eine polymere organische Faser eingesetzt.

Diese polymere organische Faser (Komponente D) ist vorzugsweise eine Polyesterfaser, eine Polyacrylnitrilfaser oder eine Mischung dieser beiden Fasern. Als Polyesterfaser (für die Komponente D) ist Polyethylenterephthalat besonders geeignet, da eine hohe Abstimmung des Verstärkungsmaterials mit der Matrix vorliegt. Geeignet sind darüberhinaus andere hochfeste Fasermaterialien wie vollaromatische Polyester, Aramide oder Polyamide. Eine zusammenfassende Übersicht über zur Verstärkung geeignete Fasermaterialien gibt der Tagungsband "Faserverstärkte Kunststoffe, Standortbestimmung", 22. Internatione Chemiefaser-Tagung, Dornbirn 1983, Herausgeber: H. Batzer, W. Albrecht.

In einer bevorzugten Ausführungsform enthält die Polyesterformmasse 0,2 bis 30 Gew.-% einer Polyester- und/oder Polyacrylnitrilfaser, besonders bevorzugt 0,5 bis 20 Gew.-%, ganz besonders bevorzugt 1 bis 10 Gew.-%. (Die Gew.-%-Angaben beziehen sich auf die gesamte Polyesterformmasse, d.h. die Summe der Komponenten A, B, C, D und E).

Als Komponente C wird bevorzugt ein Copolymer aus Ethylen und Vinylacetat verwendet, dessen Vinylacetatgehalt 30 bis 80 Gew.-% beträgt. Besonders bevorzugt ist ein Copolymer mit einem Gehalt an Vinylacetat von 35 bis 55 Gew.-%. Bei einem zu geringem Vinylacetatgehalt werden die Haftungseigenschaften der Polyesterformmasse schlecht, bei einem zu hohem Gehalt ist die Verarbeitung erschwert bis unmöglich. Das Copolymer kann gegebenenfalls einen dritten Monomeren-Baustein enthalten, wie z.B. Propylen oder Butylen.

Als ethylenisch ungesättigte Polyester (Komponente A) eignen sich besonders die üblichen Polykondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind und gegebenenfalls zusätzlich Reste einwertiger Carbonsäuren und/oder Rest einwertiger Alkohole und/oder Reste von Hydroxycarbonsäuren enthalten, wobei zumindest ein Teil der Reste über äthylenisch ungesättigte copolymerisierbare Gruppen verfügen muß.

Als mehrwertige, insbesondere zweiwertige, gegebenenfalls ungesättigte Alkohole eignen sich die üblichen, insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, oder Butendiol-1,4. Ferner können ein-, drei- oder höherwertige Alkohole, wie z.B. Ethylhexanol, Fettalkohole, Benzylalkohole, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzliche andere modifizierend wirkende zweibasische, ungesättigte und/oder gesättigte, sowie aromatische Carbonsäuren, wie z.B. Bernsteinsäure, Glutarsäure, Adipinsäure, Sebacinsäure, Pimelinsäure, Phthalsäureanhydrid, o-Phthalsäure, Isophthalsäure oder Terephthalsäure einkondensiert sein, ferner ein-, drei- und höherbasische Carbonsäuren, wie z.B. Äthylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid und Fumarsäure.

Bezüglich der Zusammensetzung ungesättigter Polyester sei beispielsweise auf das Buch von H.V. Boenig "Unsaturated Polyesters: Structure and Properties", Amsterdam, 1964, verwiesen.

Als ethylenisch ungesättigte monomere Verbindungen (Komponente B) kommen die üblicherweise zum Herstellen ungesättigter Polyesterformmassen verwendeten Allyl- und vorzugsweise Vinylverbindungen in Frage, wie Styrol, substituierte Styrole, wie p-Chlorstyrol oder Vinyltoluol, Ester der Acrylsäure und Methacrylsäure mit 1 bis 18 Methacrylsäuremethylester und (Meth)-acrylsäureamide, Allylester, wie Diallylphthalat, und Vinylester wie Vinylpivalat und andere. Desgleichen eignen sich die Gemische der genannten olefinisch ungesättigten Monomeren.

Bevorzugt geeignet als Komponente B) sind Styrol, $\alpha$-Methylstyrol, Chlorstyrol, Vinyltoluol, Divinylbenzol und Diallylphthalat, besonders bevorzugt ist Styrol.

Die als Komponente E genannten Radikalbildner sind vorzugsweise die für die Vinylpolymerisation bekannten Typen. Geeignet sind beispielsweise Peroxide, wie Dibenzoylperoxid, Acetylperoxid, Benzoylhydroperoxid, Perester, Perketale, Di-tert.-butylperoxid, Percarbonate, wie Diisopropylperoxydicarbonat oder Azoverbindungen, wie $\alpha,\alpha$-Azobisisobutyronitril.

Als Verdickungsmittel sind beispielsweise geeignet: Erdalkalioxide, wie Calciumhydroxid, Magensiumhydroxid und vorzugsweise Magnesiumoxid sowie Gemische dieser Oxide bzw. Hydroxide. Diese können auch teilweise durch Zinkoxid ersetzt sein.

Als Inhibitoren kommen die üblichen in Frage, wie z.B. Hydrochinon, tert.-Butylbrenzkatechin, p-Benzochinon, Di-tert.-butyl-p-kresol,Chloranil, Nitrobenzole, wie m-Dinitrobenzol, Thiodiphenylamin oder Salze von N-Nitroso-N-cyclohexylhydroxylamin sowie deren Gemische.

Den erfindungsgemäßen, härtbaren, ungesättigten Polyesterformmassen können außerdem übliche Füllstoffe, Flammschutzmittel, Gleitmittel sowie gegebenenfalls inerte Lösungsmittel, Farbstoffe, Polymerisationsbeschleuniger und/oder weitere üblicherweise bei der Verarbeitung von Polyesterformmassen verwendete Hilfsstoffe zugesetzt werden.

Geeignete Füllstoffe sind z.B. übliche feinpulverige oder körnige anorganische oder organische Füllstoffe, wie Kreide, Kaolin, Quarzmehl, Dolomit, Schwerspat, Metallpulver, Zement, Talkum, Kieselgur, Holzmehl, Holzspäne, Pigmente und dergleichen. Bevorzugter Füllstoff ist Kreide (Calziumcarbonat).

Als Gleitmittel kommen beispielsweise Zink-, Magnesium- und Calciumstearat sowie Polyalkylenätherwachse in Betracht, als Flammschutzmittel z.B. Aluminiumhydroxyd.

Die erfindungsgemäße Polyesterformmasse enthält vorzugsweise auf 100 Gewichtsteile des ethylenisch ungesättigten Polyesters (mit 35 % Styrol-Zusatz)

     a) 2 bis 30 Gewichtsteile des Ethylen/Vinylacetat-Mischpolymers, vorzugsweise 7 bis 15 Gewichtsteile

     b) 5 bis 300 Gewichtsteile des faserförmigen Verstärkungsmittels (Komponente D), bevorzugt 70 bis 130 Gewichtsteile

     c) 0,5 bis 8 Gewichtsteile eines Radikalbildners, bevorzugt 2 bis 4 Gewichtsteile.

     d) 0,5 bis 15 Gewichtsteile eines Gleitmittels, vorzugsweise 2 bis 5 Gewichtsteile

     e) 100 bis 1000 Gewichtsteile eines Füllstoffes und/oder Flammschutzmittels, vorzugsweise 400 bis 700 Gewichtsteile.

     f) 10 bis 180 Gewichtsteile einer 40 %igen styrolischen Lösung von Polyvinylacetat, bevorzugt 80 bis 120 Gewichtsteile.

Ein wesentlicher Vorteil der genannten Polyesterformmassen ist ihre Eigenschaft, eine hohe Haftung auf verzinktem Stahlblech sowie auf kataphoresegrundiertem Stahl- oder Aluminiumblech oder auf geätztem oder phosphatiertem Aluminiumblech zu besitzen. Diese Haftung tritt dabei nicht nur auf, wenn die aufeinander fixierten Formköprer einer ständig gleichbleibenden Temperatur ausgesetzt sind, sondern bleibt auch dann erhalten, wenn Temperaturschwankungen auftreten, die bei herkömmlichen, miteinander verbundenen Metall-Kunststoff-Formteilen zur Delamination führen.

Die erfindungsgemäße Polyesterformmasse weist u. a. auf verzinktem Stahlblech eine so hohe Haftung auf, daß die Verwendung eines Haftvermittlers (wie z.B. einer Dispersion bzw. Lösung von Polyacrylaten, Polyvinylethern oder Polyvinylisobutylen) zwischen beiden Materialien nicht erforderlich ist.

Als zusätzliche günstige Eigenschaft weist die beschriebene Polyesterformmasse eine geringe Sprödbruch-Anfälligkeit auf.

Da diese günstigen Haftungseigenschaften auch nach mehrfacher Erwärmung des Verbundwerkstoffes (faserverstärkte Polyestermasse auf Stahlblech) erhalten bleiben, ist die oben beschriebene Polyesterformmasse in besonderem Maße zur Herstellung solcher Formteile geeignet, für die sich aus der Kombination der Werkstoffe Metall und Kunststoff besondere Vorteile ergeben. So besteht beispielsweise im Karosseriebau, im Maschinenbau und im Bereich der Elektroindustrie ein steigender Bedarf an der Kombination der Werkstoffe Stahlblech und Kunststoff, sowohl aus Gründen der Entwicklung neuer Materialeigenschaften (geringeres Gewicht eines Verbundwerkstoffteils bei gleicher Stabilität, verbesserte Oberflächeneigenschaften, bessere Lärmdämmung, etc.) wie auch zur Vereinfachung von Produktionsprozessen (Verminderung der Anzahl an Prozeßschritten, einfachere Konstruktion der Formteile, etc.).

Durch einen einfachen Prozeß lassen sich ausgehend von der oben beschriebenen, durch polymere Fasern verstärkten Polyesterfaserformmasse und einem verzinkten Stahlblech beliebige Formteile herstellen, wobei im wesentlichen die folgenden Verfahrensschritte erforderlich sind:

     a) das verzinkte Stahlblech wird in einer Matrize durch einen Stempel zu einem Blechformteil gepreßt,

     b) die härtbare Polyesterformmasse wird auf das geformte Stahlblechteil aufgebracht (beispielsweise aufgespritzt) und

     c) das Blechformteil und die Polyesterformmasse werden unter Wärmezufuhr ohne Zusatz eines Haftvermittlers verpreßt.

Anschließend wird der so entstandene Verbundwerkstoff abgekühlt und kann direkt eingesetzt oder weiter modofiziert (geschliffen, gesägt, lakkiert, etc.) werden.

Die Erfindung wird durch die nachfolgenden Beispiele verdeutlicht:

**Beispiel 1**

Herstellung der Polyesterformmasse I:

In eine mit einem Dissolver (Schnellrührer) ausgestattete Apparatur werden 150 Teile einer 65 %igen Lösung eines ungesättigten Polyesterharzes in Styrol gegeben. Als ungesättigtes Polyesterharz kann beispielsweise das handelsübliche Produkt ®Palapreg P 18/21 (eingetragenes Warenzeichen der BASF AG, Ludwigshafen) eingesetzt werden.

110 Gew.-Teile einer 40 %igen Polyvinylacetatlösung in Styrol werden zugesetzt. (Verwendung findet beispielsweise das handelsübliche Produkt ®Palapreg H 870/01 (Hersteller BASF AG, Ludwigshafen)). Die beiden Komponenten werden 3 Minuten bei 800 U/min verrührt. Nachfolgend werden in der angegebenen Reihenfolge bei laufendem Rührwerk zugesetzt:

     1. 3 Gew.-Teile tert.-Butylperbenzoat (98 %ig) oder ein analoger Radikalbildner

     2. 3 Gew.-Teile Zinkstearat

     3. 10 Gew.-Teile eines Ethylen-Vinylacetat-Copolymerisates mit einem Vinylacetatgehalt von ca. 45 Gew.-% (beispielsweise das handelsübliche Produkt ®Levapren 450 oder 452, eingetragenes Warenzeichen der Firma Bayer AG, Leverkusen).

Nach Zugabe der drei Komponenten wird ca. 10 Minuten bei 600 U/min gerührt.

Die so gefertigte hochviskose Vormischung wird in einen Sigma-Kneter gegeben. In einem Zeitraum von 10 Minuten werden 630 Gew.-Teile des Füllstoffes Calziumcarbonat zugeführt und innig vermischt. Als letzte Komponente werden 100 Gew.-Teile einer thermoplastischen Synthesefaser innerhalb von 5 bis 8 Minuten bei laufender Maschine zugesetzt. Als thermoplastische Faser kommt beispielsweise eine Mischung von 50 Gew.-% eines handelsüblichen Polyacrylnitrils (z.B. ®Dolanit 11, Hersteller Hoechst AG, Frankfurt, Dicke der Fasern: 104 $\mu$m, Länge der Faserabschnitte: 6 mm) und 50 Gew.-% eines Polyesters (z.B. ®Trevira 702, Hersteller Hoechst AG, Frankfurt, Länge der Faserabschnitte: 6 mm) zum Einsatz. Nach beendetem Zusatz des thermoplastischen Fasermaterials wird die komplette Mischung weitere 2 bis 10 Minuten geknetet und danach aus dem Kneter entfernt und umgehend luftdicht verpackt.

Nach einer Ablagerungszeit von mindestens 24 Stunden ist die Kunststoffmasse verarbeitbar. Die Verarbeitung kann nach allen einschlägigen Verfahren, wie beispielsweise durch Spritzgußverfahren, Preßverfahren oder Spritzpreßverfahren, erfolgen. Für einen automatisierten Verarbeitungsprozeß sind die, für eine Dosierung üblichen hydraulischen Stopfgeräte oder Portionierungsgeräte geeignet. Die Formenwerkzeuge, hergestellt aus den üblichen dafür geeigneten Stählen, mit oder ohne Oberflächenvergütung (wie z.B. Hartverchromen), sollten für die Vernetzung der Kunststoffmasse beheizbar ausgelegt sein.

## Beispiel 2

Herstellung der Polyesterformmasse II

Analog wie in Beispiel 1 beschrieben, werden 100 Gew.-Teile des ungesättigten Polyesterharzes in styrolischer Lösung z.B. das handelsübliche Produkt Alpolit UP 004. (Warenzeichen der Hoechst AG, Frankfurt) mit 110 Gew.-Teilen einer 40 %igen Polyvinylacetatlösung in Styrol (®Palapreg H 870/01) verrührt. Anschließend werden 4 Gew.-Teile des Radikalbildners tert.-Butylperbenzoat (98 %ig) bei laufendem Rührwerk zugegeben. 5 Gew.-Teile Zinkstearat werden zugesetzt, anschließend 12 Gew.-Teile eines Ethylen-Vinylacetat-Copolymerisates (z.B. das handelsübliche Produkt ®Levapren 450). Es wird 10 Minuten bei ca. 600 U/min gerührt. Die so gefertigte Vormischung wird in einem Sigma-Kneter überführt und es werden in einem Zeitraum von etwa 10 Minuten als Füllstoff 450 Gew.-Teile Calziumcarbonat (z.B. ®Omya-Millicarb (Hersteller Firma Omya, Köln) sowie 200 Gew.-

Teile Aluminiumhydroxyd (z.B. das handelsübliche Produkte ®Martinal ON 310, Hersteller Martinswerk, Bergheim) zugesetzt. Die Komponenten werden innig vermischt. Innerhalb von etwa 10 Minuten werden abschließend 90 Gew.-Teile einer thermoplastischen Polyacrylnitrilfaser (z.B. handelsübliches Produkt ®Dolanit 11, Warenzeichen der Hoechst AG, Frankfurt, Durchmesser der Faser 52 $\mu$m; Faserlänge: 6 mm), zugesetzt. Nach gründlicher Durchmischung wird die Masse dem Kneter entnommen und luftdicht verpackt. Vor der Weiterverarbeitung ist eine Ablagerungszeit von mindestens 24 Stunden erforderlich.

## Vergleichsbeispiel V 3

Herstellung der Polyesterformmasse

Die Kunststoffmasse für das Vergleichsbeispiel wurde analog zu Beispiel 1 ausgehend von folgenden Komponenten hergestellt:

1. 100 Teile eines ungesättigten Polyesterharzes (®Palapreg P18/21).

2. 110 Gew.-Teile einer 40 %igen Polyvinylacetatlösung in Styrol (®Palapreg H 870/01).

3. 4 Gew.-Teile tert.-Butylperbenzoat (98 %ig).

4. 12 Gew.-Teile eines Ethylen-Vinylacetat-Copolymerisates (®Levapren 452).

5. 450 Gew.-Teile Calziumcarbonat (®Omya-Millicarb). 6. 5 Gew.-Teile Zinkstearat

sowie

7. 200 Gew.-Teile Glasfasern (Schnittlänge 6 mm, Durchmesser der Faser 9-11 $\mu$m.

## Anwendungsbeispiel A 4

Herstellung von Probekörpern aus den Polyesterformmassen 1, 2 und 3.

In einem auf eine Temperatur von 160 - 165 °C beheizten unverchromten Stahlwerkzeug (aus chromhaltigem Stahl hergestelltes Tauchkantenwerkzeug) werden, zuvor unter Serienbedingungen entfettete, Abschnitte aus elektrolytisch verzinktem Stahlblech (120x120x0,7 mm) eingelegt. Auf das eingelegte Stahlblech wird eine abgewogene Menge der Polyesterformmasse aus den Beispielen 1 bis 3 gegeben, die zur kompletten Füllung der Form ausreicht. Danach wird das Preßwerkzeug sofort geschlossen und unter einem Preßdruck von 15 N/mm² 80 sek. lang belassen. Zur Abkühlung werden die 4 mm dicken Probekörper (Verbundplatten) aus der Form entnommen und abgelegt.

## Anwendungsbeispiel A 5

Untersuchung der Haftfestigkeit von Polyesterformmassen auf verzinktem Stahlblech

Die nach Anwendungsbeispiel A4 hergestellten Probekörper werden in quadratische Plättchen mit 22 mm Kantenlänge zersägt. Diese Plättchen werden mittels eines Zweikomponten-Polymethylmethacrylatharzes zwischen zwei Stempel aus Aluminium (20x20x100 mm) geklebt. In einer Universal-Prüfmaschine werden die so vorbereiteten Proben in Anlehnung an DIN 53 397 bezüglich ihrer Reißfestigkeit untersucht.

Mit jeweils 6 Probekörpern (hergestellt aus Polyesterformmassen der Beispiele 1, 2 und V3) werden Messungen bezüglich der Reißfestigkeit angestellt. Dabei wird sowohl die Reißfestigkeit ohne wie auch mit Lackieralterung durchgeführt. Unter Lackieralterung ist eine mehrfache Erwärmung und anschließende Abkühlung zu verstehen, wie sie bei der Herstellung lackierter Stahlblechteile im Karosseriebau üblich ist.

Die diesen Versuchen zugrundeliegende Lackieralterung besteht beispielsweise aus folgenden 4 Schritten:

1. 22 Min. bei einer Temperatur von 200°C mit anschließender Abkühlung an der Luft auf Raumtemperatur

2. 9,7 Min. bei einer Temperatur von 175°C mit anschließender Abkühlung (wie oben beschrieben)

3. 21,8 Min. bei einer Temperatur von 185°C mit anschließender Abkühlung (wie oben beschrieben) und

4. 24,5 Min. bei einer Temperatur von 150°C mit anschließender Abkühlung (wie oben beschrieben).

Bei den Messungen zur Reißfestigkeit (Haftungseigenschaften der Polyesterformmassen auf verzinktem Stahlblech) wurden folgende Ergebnisse erhalten:

Ergebnisse für die Polyesterformmasse aus Beispiel 1:
a) vor der Lackieralterung gemessene Werte in N/mm²:
Probe 1: 14,08
Probe 2: 14,43
Probe 3: 13,24
Probe 4: 14,32
Probe 5: 13,02
Probe 6: 14,40
b) Werte nach der Lackieralterung:
Probe 1: 13,61
Probe 2: 14,71
Probe 3: 14,22
Probe 4: 13,33
Probe 5: 14,56
Probe 6: 14,43.
Ergebnisse für die Polyesterformmasse aus Beispiel 2:
a) vor der Lackieralterung gemessene Werte in N/mm²:
Probe 1: 15,57
Probe 2: 12,57
Probe 3: 14,45
Probe 4: 15,07
Probe 5: 13,84
Probe 6: 13,95
Werte nach der Lackieralterung:
Probe 1: 16,49
Probe 2: 11,67
Probe 3: 14,36
Probe 4: 12,64
Probe 5: 13,45
Probe 6: 10,19
Meßergebnisse für die Polyesterformmasse aus dem Vergleichsbeispiel V 3:
a) vor der Lackieralterung gemessene Werte in N/mm²:
Probe 1: 14,3
Probe 2: 17,6
Probe 3: 17,0
Probe 4: 12,4
Probe 5: 15,2
Probe 6: 16,4
b) Werte nach der Lackieralterung:
Probe 1: 0,84
Probe 2: 2,90
Probe 3: 3,50
Probe 4: 5,90
Probe 5: 3,80
Probe 6: 0,55

Wie aus den vorangestellten Meßergebnissen klar hervorgeht, weisen die erfindungsgemäßen Polyesterformmassen (Beispiel 1 und Beispiel 2) im Vergleich zu der Polyesterformmasse, die als faserförmiges Verstärkungsmittel eine Glasfaser enthält (Vergleichsbeispiel V3), den Vorteil auf, daß die Haftung der Formmasse auf dem verzinkten Stahlblech auch nach der Lackieralterung erhalten bleibt. Die Meßwerte für die Reißfestigkeit waren bei allen Proben der Beispiele 1 und 2 sowohl vor der Lackieralterung wie nach der Lackieralterung vergleichbar hoch, wohingegen die Reißfestigkeit bei den Glasfasern enthaltenden Probekörpern (aus dem Vergleichsbeispiel) nach der Lackieralterung auf einen Bruchteil reduziert ist.

Die verminderte Haftung nach der Lackieralterung (Erhitzen) kommt dadurch zustande, daß ein großer Teil der Fläche interlaminar (zwischen Blech und Polyesterformmasse) abschert.

Bei der nicht abgesicherten Fläche ist die Reißfestigkeit die gleiche wie vor der Lackieralterung.

Die Haftfläche bei dem erfindungsgemäßen Verbund von Polyestermasse und Blech bleibt nahezu unverändert, wohingegen die Haftfläche im Vergleichsbeispiel nach dem Erhitzen stark vermindert ist.

Die Abscherung während der Lackieralterung ist darauf zurückzuführen, daß die Polyestermasse eine deutlich kleinere Wärmeleitfähigkeit besitzt als das Metall. Es ist zwar möglich, eine Polyestermasse bereitzustellen, die den gleichen Wärmeausdehnungskoeffizienten aufweist wie Stahl, aber es ist materialbedingt nicht möglich, die gleiche Wärmeleitfähigkeit beider Materialien zu verwirklichen, weshalb während der Aufheiz- und Abkühlphasen, (z.B. bei der Lackierung) große Spannungen im Verbundmaterial auftreten (analog zu einem Bimetallelement).

Die erfindungsgemäße Polyesterformmasse weist als Verstärkungsmaterial eine organische Polymerfaser auf, was zu einer erhöhten Elastizität des Verbundpartners führt. Wie ein Vergleich der Beispiele 1 und V3 zeigt, ist die Abscherung bei sonst gleicher Matrix bei Beispiel 1 deutlich geringer.

**Anwendungsbeispiel A6**

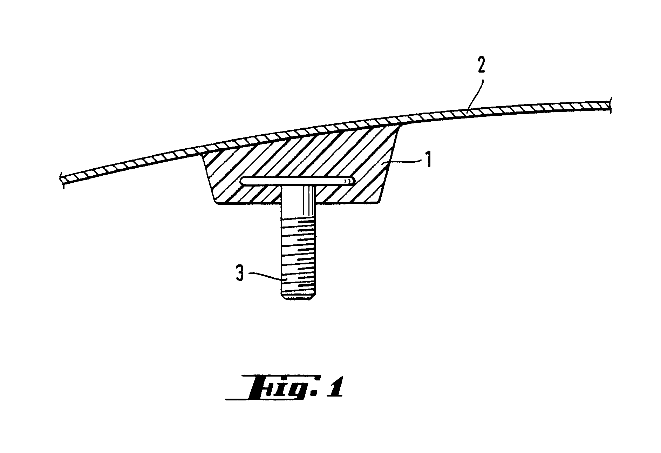

Wie in Fig. 1 exemplarisch dargestellt, eignet sich die erfindungsgemäße Polyesterformmasse dazu, ein Verbundelement mit einem verzinkten Stahlblechteil zu bilden. In Fig. 1 ist dargestellt, wie an einer beliebigen Stelle der Karosserieaußenhaut (z.B. Dach eines Kraftfahrzeuges) ein Befestigungspunkt angebracht ist. Dabei ist ein Gewindebolzen (3) durch die angespitzte Polyesterformmasse (1) mit dem verzinkten Stahlblech verbunden.

**Anwendungsbeispiel A7**

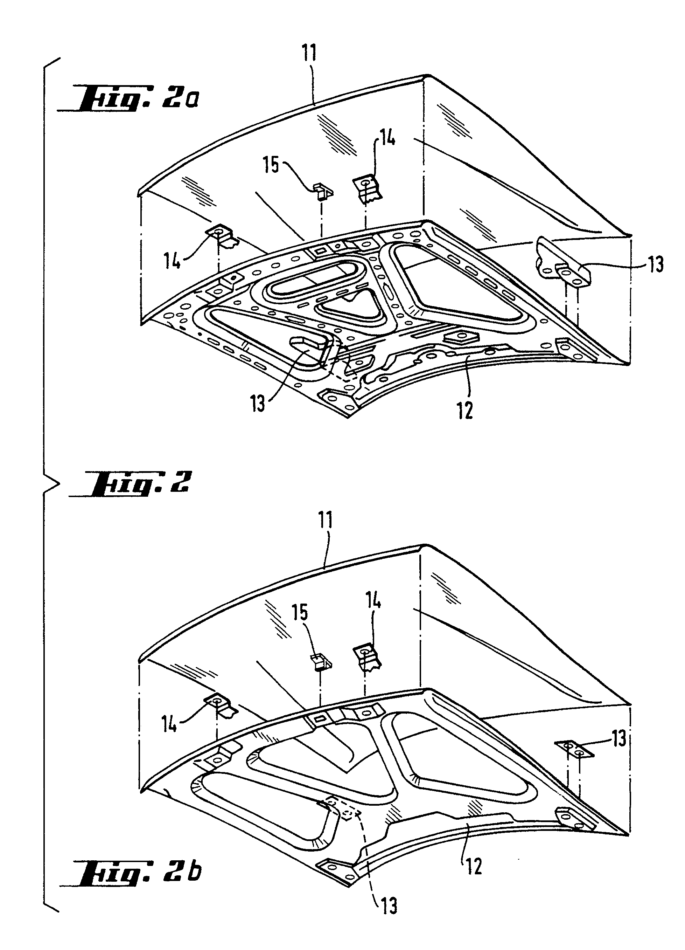

Wie in Fig. 2 dargestellt, läßt sich die erfindungsgemäße Polyesterformmasse beispielsweise vorteilhaft zum Aufbau einer Motorhaube für ein Kraftfahrzeug verwenden.

Fig. 2a zeigt den schematisierten Aufbau einer Serienmotorhaube mit zwei Stahlblechen (1 (Außenhaut) und 2 (Innenteil)). Die Teile 3 bis 5 haben folgende Bedeutung: 3 (Verstärkung der Scharnierlager), 4 (Verstärkung der Schloßzapfenlager) sowie 5 (Verstärkung des Fanghakenlagers).

Fig. 2b zeigt den schematisierten Aufbau einer Motorhaube, bestehend aus einer Außenhaut aus verzinktem Stahlblech (1), aus einem Formteil aus der erfindungsgemäßen Polyesterformmasse (2) sowie aus den zu Fig. 2a analogen Teilen 3 bis 5.

Bisher waren zur Montage des Motorhaubeninnenteils (2) und der dazugehörigen Verstärkungen aufwendige Werkzeugsätze notwendig. Für den Zusammenbau der kompletten Motorhaube waren umfangreiche Einrichtungen für Schweißarbeiten, Verkleben und Bördeln erforderlich.

Mit der erfindungsgemäßen Polyestermasse ist es jedoch möglich, in einem einzigen Arbeitsgang das Innenteil (2) - mit einfachen Einlegern (3 bis 5) zur Verstärkung versehen - herzustellen und mit der Außenhaut (dauerhaft) zu verbinden.

**Patentansprüche**

1.  Härtbare ungesättigte Polyesterformmasse, enthaltend ein Gemisch folgender Komponenten:

    A. ethylenisch ungesättigter Polyester
    B. ethylenisch ungesättigte, copolymerisierbare monomere Verbindung
    C. schwindungsreduzierendes thermoplastisches Polymer D. faserförmiges Verstärkungsmittel
    sowie gegebenenfalls
    E. Verdickungsmittel, Radikalbildner, Inhibitoren, Füllstoffe, Flammschutzmittel, Gleitmittel, Farbstoffe und/oder Pigmente,
    dadurch gekennzeichnet, daß die Komponente C eine Kombination eines löslichen und/oder quellfähigen thermoplastischen Mischpolymers auf der Basis von Ethylen und Vinylacetat sowie eines löslichen und/oder quellfähigen Polyvinylacetats ist, und daß als Komponente D eine polymere organische Faser verwendet wird.

2.  Härtbare ungesättigte Polyesterformmasse gemäß Anspruch 1, dadurch gekennzeichnet, daß sie als Komponente D eine Polyesterfaser und/oder eine Polyacrylnitrilfaser enthält.

3.  Härtebare ungesättigte Polyesterformmasse gemäß Anspruch 1, dadurch gekennzeichnet, daß sie als Komponente D insgesamt 0,2 bis 30 Gew.-% (bezogen auf die Summe der Komponenten A, B, C, D und E) einer Polyethylenterephthalat-Faser und/oder eine Polyacrylnitrilfaser, sowie als Komponente E einen Füllstoff enthält.

4.  Härtbare ungesätigte Polyesterformmasse gemäß Anspruch 1, dadurch gekennzeichnet, daß sie als Komponente D insgesamt 0,5 bis 20 Gew.-% (bezogen auf die Summe der Komponenten A, B, C, D und E) einer Polyethylenterephthalat-Faser und/oder eine Polyacrylnitrilfaser sowie als Komponente E einen Füllstoff enthält.

5.  Härtbare ungesätigte Polyesterformmasse gemäß Anspruch 1, dadurch gekennzeichnet, daß sie als Komponente D insgesamt 1 bis 10 Gew.-% (bezogen auf die Summe der Komponenten A, B, C, D und E) einer Polyethylenterephthalat-Faser und/oder eine Polyacrylnitrilfaser sowie als Komponente E einen Füllstoff enthält.

6. Härtbare ungesättigte Polyesterformmassen gemäß einem der Ansprüche 1-5, dadurch gekennzeichnet, daß sie als Komponente C neben einem löslichen und/oder quellfähigen Polyvinylacetat ein lösliches und/oder quellfähiges thermoplastisches Mischpolymer aufgebaut aus Ethylen- und Vinylacetat-Einheiten mit einem Vinylacetatanteil von 30 bis 80 Gew.-% enthält.

7. Verwendung der härtbaren, ungesättigten Polyesterformmasse gemäß Anspruch 1 zur Herstellung von Formkörpern.

8. Verwendung der härtbaren ungesättigten Polyesterformmasse gemäß Anspruch 1 zur Herstellung von Formkörpern für den Karossierbau.

9. Verfahren zur Herstellung eines Formkörpers aus einer Polyesterformmasse gemäß Anspruch 1 und einem verzinkten Stahlblech, gekennzeichnet durch folgende Verfahrensschritte:
    a) das Stahlblech wird in einer Matrize durch einen Stempel zu einem Blechformteil gepreßt,
    b) auf das geformte Stahlblechteil wird die härtabre Polyesterformmasse aufgebracht,
    c) das Blechformteil und die Polyesterformmasse werden unter Wärmezufuhr ohne Zusatz eines Haftvermittlers verpreßt.

10. Verfahren zur Herstellung eines Formkörpers aus einer Polyesterformmasse gemäß Anspruch 1 und einem kataphoresegrundierten Stahlblech, gekennzeichnet durch folgende Verfahrensschritte:
    a) das Stahlblech wird in einer Matrize durch einen Stempel zu einem Blechformteil gepreßt,
    b) auf das geformte Stahlblechteil wird die härtabre Polyesterformmasse aufgebracht,
    c) das Blechformteil und die Polyesterformmasse werden unter Wärmezufuhr ohne Zusatz eines Haftvermittlers verpreßt.

11. Verfahren zur Herstellung eines Formkörpers aus einer Polyesterformmasse gemäß Anspruch 1 und einem Aluminiumblech, gekennzeichnet durch folgende Verfahrensschritte:
    a) das Aluminiumblech wird in einer Matrize durch einen Stempel zu einem Blechformteil gepreßt,
    b) auf das geformte Aluminiumblechteil wird die härtabre Polyesterformmasse aufgebracht,
c) das Blechformteil und die Polyesterformmasse werden unter Wärmezufuhr ohne Zusatz eines Haftvermittlers verpreßt.

Fig. 1

Fig. 2a

Fig. 2

Fig. 2b